# EUROPEAN PATENT SPECIFICATION

(11) **EP 2 799 351 B1**
(45) Date of publication and mention of the grant of the patent: **06.09.2017**
(21) Application number: 14425050.3
(22) Date of filing: 30.04.2014
(51) Int. Cl.: B65B 51/22, B31B 50/84, B65B 61/18, B29C 65/08

(54) **APPARATUS FOR APPLYING A POUR SPOUT FITMENT TO A CONTAINER**
VORRICHTUNG ZUM ANBRINGEN EINES AUSGIESSELEMENTS AN EINEN BEHÄLTER
APPAREIL PERMETTANT D'APPLIQUER UN BEC VERSEUR SUR UN RÉCIPIENT

(30) Priority: 30.04.2013 IT VI20130123
(43) Date of publication of application: 05.11.2014
(73) Proprietor: Galdi S.R.L., 31044 Montebelluna (TV) (IT)
(72) Inventor: Candiotto, Galdino, 31044 Montebelluna (TV) (IT)
(74) Representative: Santi, Filippo

(56) References cited:
- WO-A1-00/18649
- WO-A2-2007/039755
- US-A- 5 759 319
- US-A1- 2006 073 958
- US-A1- 2006 080 944

## Description

The present invention relates to an apparatus for coupling a pour spout to a container.

More particularly, the present invention relates to the coupling of a pour spout fitment to the wall of a container, and refers especially to an apparatus for coupling a pour spout fitment to a hole provided on a paper container for liquids, in which the pour spout is threaded for coupling with a cap.

Therefore, the present invention relates to the field of machineries and equipments for packaging items or materials.

Nowadays, in the field of equipments for coupling a pour spout fitment to a paperboard container for liquid food, equipment for ultrasonic welding is known.
These equipments comprise a sonotrode fit to weld a pour spout fitment inserted in a hole provided in the wall of the container.

The pour spout fitment has a flange which is brought to abut against the circular edge of the hole and welded to the latter by the action of the sonotrode.
In details, the pour spout fitment is brought by a mobile support fit to insert the pour spout fitment itself in the hole.
The mobile support has an annular surface on which the flange abuts.
During the welding, the edge of the hole and the flange are pressed one on top of the other by the combined action of the sonotrode and the annular surface of the support. From an operational point of view, the traditional equipments perform a coupling cycle which consists of the following steps:
- Loading a pour spout fitment onto the mobile support;
- Inserting the mobile support in the paperboard;
- Inserting the pour spout fitment in the hole by an advancement of the mobile support up to the flange on the edge of the hole;
- Coupling of the sonotrode to the pour spout fitment, so that the flange and the edge of the hole are pressed between the sonotrode and the annular surface of the mobile support;
- Driving of the sonotrode to perform the weld of the flange on the edge of the hole;
- Moving away the sonotrode from the container and the support from the pour spout fitment;
- Drawing of the support from the container.
A first model of the traditional apparatus has:
- An advancement device for a row of paperboards;
- A rotatable element which contains a plurality of mobile supports and that turns according to a rotational axis normal to the direction of advancement of the row of paperboards.

The rotatable element is provided of a plurality of radial arms to the rotational axis on the free end of which supports are provided.

The circular trajectory of the supports and the linear one of the containers interfere and the rotation of the rotatable element is coordinated with the advancement of the containers so that the supports, brought to rotate, insert themselves in subsequent containers during the advancement of the latter.

The rotatable element is also translatable along its own rotational axis to bring a support, inserted in a container, to insert the pour spout fitment in the hole of the container.

A second traditional model of these appliances has an oscillation arm which contains one or two supports. This arm is oscillating around an oscillation arm parallel to the direction of advancement of the containers.

Consequently to its own swing, the oscillation arm moves the supports between a position drawn from the corresponding containers of the row to an operational position in which the supports are inserted in the containers and aligned to the holes of these in order to insert herein the corresponding pour spouts.

The oscillation arm is provided of translation means fit to bring the supports to insert the pour spouts fitment in the holes of the containers, when these are situated in said operational position.

This oscillation arm is placed on a side of the row of containers, on the other side of which a sonotrode is placed being mobile along the direction of welding that is perpendicular to the direction of advancement of the containers.

From an operational standpoint, when the supports are in the operational position, they pinch in cooperation with the sonotrode the edge of the hole of the container and the flange to then weld them.

A traditional apparatus for coupling a pour spout to a container according to the preamble of claim 1 is disclosed in US5759319.

There is a strong need in the field for these traditional appliances to exemplify the structure in order to reduce the costs or increase productivity and efficiency.

The problem which stands at the base of the present invention is thus to exemplify the structure of the traditional apparatus above mentioned.

The main objective of the present document is to create an apparatus for coupling a pour spout fitment to a container giving a solution to such a problem, resolving the complained drawbacks of the traditional appliances above mentioned.

In the scope of such task, it is an objective of the present invention to propose an apparatus to couple a pour spout fitment to a container being more compact than the traditional appliances.

Another objective of the present invention is to create an apparatus to couple a pour spout fitment to a container allowing a more efficient coordination of the support for the pour spout fitment to weld and the sonotrode.

Yet another objective of the present invention is to propose an apparatus to couple a pour spout fitment to a container which consists of an alternative to the traditional appliances.

This task, as well as these and other objectives which will be more evident later on, are reached by an apparatus to couple a pour spout fitment to a container according to claim 1 herein affixed.

The detailed features of the apparatus to couple a pour spout fitment to a container according to the invention, are claimed in the dependent claims which are herein mentioned in their integral form.

An apparatus according to the invention results structurally simpler than the traditional appliances because it allows to avoid the displacement of rotation of the rotatable element of the first model of the traditional apparatus.

Additionally, an apparatus for coupling a pour spout fitment to a container according to the invention can be installed correspondingly to a side only of a line of advancement of the containers, reducing whereby the encumbrances in the transverse direction to the same line.

An apparatus for coupling a pour spout fitment to a container according to the invention results therefore structurally simpler and simple from the operational standpoint, and can be manufactured with relatively contained costs representing a valid alternative to the traditional appliances.

Further characteristics and advantages of the invention will result more from the disclosure of a preferable embodiment but non exclusive of an apparatus for coupling a pour spout fitment to a container according to the invention, shown as an illustration and non limitative in the drawing tables in which:

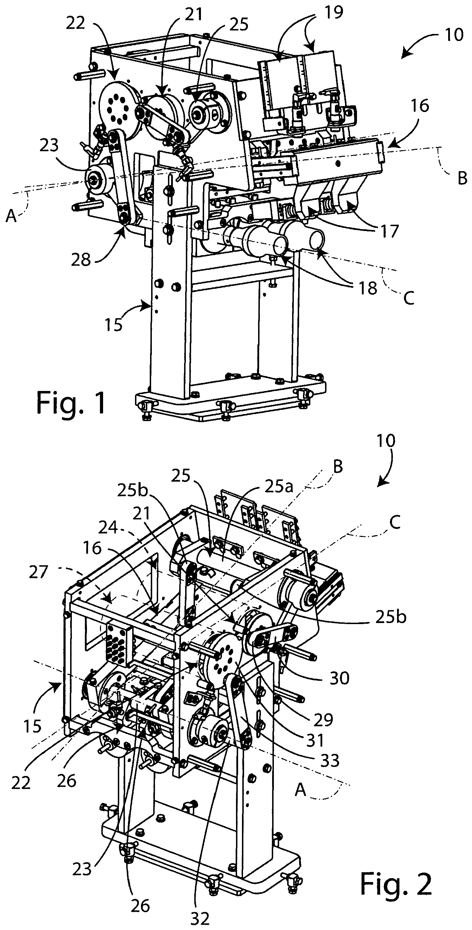

- Figure 1 shows, in a prospective view, an apparatus for coupling a pour spout fitment to a container, according to the invention;
- Figure 2 shows the apparatus of Figure 1 in a second prospective view with a few removed parts in order to highlight other parts;

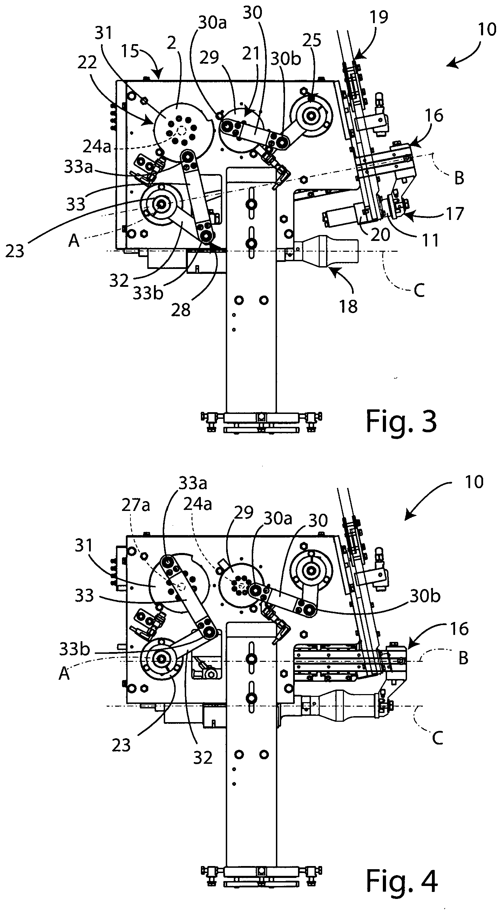

- Figure 3 shows the apparatus of Figure 1 lifted sideways in a first operational structure;
- Figure 4 shows the apparatus of Figure 1 lifted sideways in a second operational structure;
- Figure 5 shows the apparatus of Figure 1 in cross-section;
- Figures 6a, 6b and 6c show an enlarged and schematically illustrated point of the apparatus of Figure 1, relative to the support and to the welding head, respectively in the loading position, in the insertion position and in the welding position.

With a particular reference to the above mentioned figures, it is generally referenced with a 10 an apparatus for coupling a pour spout fitment 11 to a container 12.

Particularly the present apparatus 10 is fit to the coupling of a pour spout fitment 11 to the wall 12a of a container 12.

The apparatus 10 is especially suitable to the coupling of a pour spout fitment 11, provided of a threaded collar fit to mate with a cap to a hole 12b provided on a paperboard container 12 for liquids.

With more details, the apparatus 10 is advantageously fit to weld a flange 13 of the pour spout fitment 11 to the internal edge 14 of the hole 12b provided on the wall of the container 12, which is made of impermeable paperboard, for the production of containers for liquid food such as milk, fruit juice and similar.

From the structural point of view, the apparatus 10 shows a particular peculiarity as it comprises:
- A structure 15,
- A mobile arm 16, associated to the structure 15 and oscillating to the latter according to an oscillation axis A, the mobile arm 16 being provided above the welding head 18;
- A support 17, for a pour spout fitment 11, associated to the mobile arm 16 and sliding with respect to the latter along a direction of translation B transverse to the oscillation axis A;

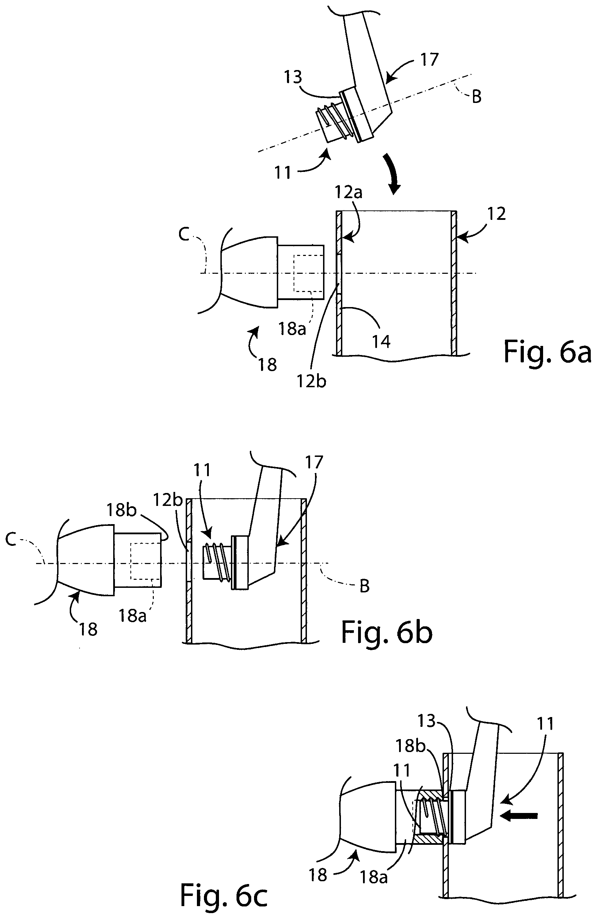

- A welding head 18, fit to abut against the wall 12a of the container 12, associated to the structure 15 and sliding with respect to the latter in a direction of welding C which is transverse to the oscillation axis A;
- A feeder 19 of pour spout fitments 11, associated to the structure 15 and provided of a power head 20 suitable to couple a pour spout fitment 11 to the support 17;
- First motor means 21 connected to the structure 15 and to the mobile arm 16 to swing the mobile arm 16 with respect to the oscillation axis A, between:
- A loading position, shown as an example in Figure 6a, in which the support 17 faces the power head 20 to receive a pour spout fitment 11 when one is not present, and
- An insertion position, shown as an example in Figure 6b, in which the support 17 is moved away from the welding head 18 and aligned to the latter with respect to the direction of translation B and the direction of translation B is parallel to the direction of welding C;
- Second motor means 22 connected along with the support 17 and the welding head 18 to drive a sliding at the same time to the support 17, in the direction of translation B and the welding head 18, in the direction of welding C, between:
- The insertion position;
- And a welding position, shown as an example in Figure 6c in which, in use, the pour spout fitment 11 and the wall 12a of the container 12 are pinched between the welding head 18 and the support 17.

The second motor means 22 act advantageously along with the support 17 and on the welding head 18.

In particular, the second motor means 22 comprise advantageously a motor and a kinematics, preferably structured as best described as follows, suitable to connect the shaft of said motor along with the support 17 and the welding head 18 to drive them at the same time. As the mobile arm 16 is provided above to the welding head 18, the apparatus 10 results more compact than the traditional apparatus and may be globally placed at one side only of a line of advancement of the containers upon which to couple the pour spouts, globally reducing the transverse encumbrance to the direction of advancement of the containers with respect to the traditional appliances.

Evidently, the mobile arm 16 and the welding head 18 might be staggered along the direction of the oscillation axis A without leaving the scope of the unified claims.

The welding head 18 comprises preferably a sonotrode 18a and presents advantageously an annular edge 18b suitable to abut against the external face of the edge of the hole 14 of the container 12, on the internal face of which is to be welded the flange of the pour spout fitment 11.

Said annular edge 18b has shape and sizes corresponding to those of the flange 13 of the pour spout fitment 11 to operate, in use, the welding of the same flange 13 to the edge 14 of the hole 12b.

The apparatus 10 is advantageously suitable to be joined to a line of advancement of the containers 12 to which to weld the pour spouts fitment 11.

Preferably, in accordance with the embodiment shown in the affixed figures, the apparatus 10 shows two coupling groups each one comprising a support 17, a welding head 18 and a feeder 19 of pour spout fitment 11.

These two coupling groups are parallel and fit to couple two pour spouts fitment 11 to two corresponding containers 12 which move subsequently along said line of advancement.

Evidently, according to the needs, there might be provided more than two coupling groups capable to couple in parallel further pour spout fitments to corresponding containers.

In particular, the apparatus 10, according to the invention, may be placed on a side of such line, with the support 17 for the pour spout fitments 11 situated over the line of advancement of the containers 12 for inserting, in use, in the subsequent containers 12 which carry on along the power line and to weld to each one of these a pour spout fitment 11.

Advantageously, the apparatus 10 is configured in order to have, in use, the oscillation axis A parallel to the direction of advancement of the containers 12.

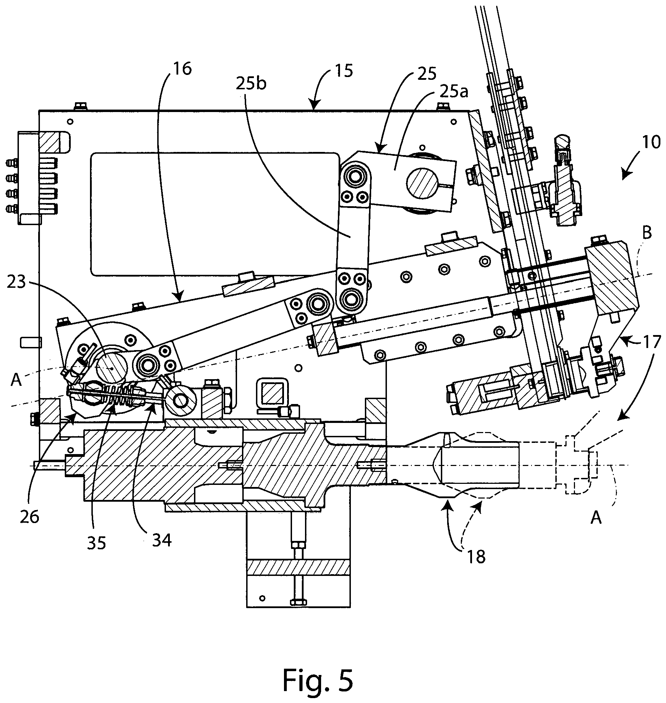

Advantageously, the direction of translation B and the direction of welding C are both perpendicular to the oscillation axis A and in the loading position, the direction of translation B forms an acute angle with the direction of welding C, as for example visible in Figure 5.

Preferably, the apparatus 10 comprises thrust means suitable to over impress by the welding head 18 and the support 17, a default force on the pour spout fitment 11 coupled with the wall 12a of the container 12, when the apparatus is in use and in said welding position.

Preferably, the thrust means can be regulated to throttle the force over impressed on the package made of the pour spout fitment 11 coupled with the wall 12a of the container 12.

In addition, the apparatus 10 advantageously comprises a hub 23 integral to the mobile arm 16 and rotatably connected to the structure 15 around the oscillation axis A.

The first motor means 21 advantageously comprise a first motor 24 fixed to the structure 15 and the first transmission means 25 connected to the shaft of the first motor 24 and to the hub 23 to transmit a rotational movement.

The second motor means 22 preferably comprise:
- An actuating mean 26 connected to the hub 23 rotatably with respect to the oscillation axis A and connected also to the support 17 and to the welding head 18 and configured to drive the passage between said insertion position and said welding position consequent to a rotation of the actuating element 26 around the oscillation axis A;
- A second motor 27 fixed to the structure 15;
- Second transmission means 28, connected to the shaft of the second motor 27 and to the actuating element 26 to impart a rotational movement between the shaft 27a of the second motor 27 and the actuating element 26, to drive the rotation of the latter around the oscillation axis A.
The first transmission means 25 advantageously comprise:
- A first crank element 29 fixed to the shaft 24a of the first motor 24;
- A first connecting rod element 30 having a first joint 30a rotatably connected to the first crank element 29 and a second joint 30b linked to the mobile arm 16, to impart the movement.

Advantageously, in the loading position and in the insertion position, the first joint 30a, the second joint 30b and the shaft of the first motor 24 are aligned according to a direction that preferably is perpendicular to the direction of translation B.

In details, the second transmission means 28 preferably comprise:
- A second crank element 31 fixed to the shaft of the second motor 27;
- A third crank element 32 fixed to the hub 23;
- A second connecting rod element 33 having a third joint 33a rotatably connected to the second crank element 31 and a fourth joint 33b connected to the third crank element 32.

In the welding position and in the insertion position, the third joint 33a, the fourth joint 33b and the shaft of the second motor 27 are advantageously aligned.

Therefore, the requested slip to the first motor 24 and to the second motor 27 is minimized to start respectively the rotation of the first crank element 29 and the second crank element 31.

The first transmission means 25 advantageously comprise also a rocker arm set 25a rotatably hinged to the structure 15 according to a rotational axis parallel to the oscillation axis A and having a first articulated arm at the second joint 30b of the first connecting rod element 30 and second articulated arms at the third connecting rod elements 25b which are articulated to the mobile arm 16.

Advantageously, said thrust means comprise:
- Connecting means 34 that link the actuating means 26 to the welding head 18 so that these result sliding one with respect to the other drivingly along the direction of welding C;
- At least an elastic element 35, preferably comprised of a spring, connected to the actuating element 26 and to the welding head 18 and suitable to elastically contrast the approach of the actuating means 26 and the welding head 18 along the direction of welding C.

From an operational standpoint, in use, the apparatus 10 couples pour spout fitments 11 to containers 12 by a cycle which is based on the sequence of the following steps:
- The support 17 is placed in the loading position and the feeder 19 mounts a pour spout over it;
- The support 17 is placed in the insertion position by the action of the first motor 24 that swings the mobile arm 16, in such a position the support supports, within the container 12, the pour spout fitment 11 with the threaded collar aligned to the hole 12b and the flange facing the edge 14 of the hole 12B;
- The support is placed in the welding position by the action of the second motor 27, so that the threaded collar of the pour spout fitment 11 crosses the hole 12b and the flange 13 abuts against the internal face of the edge 14 of the hole 12b, as well as the welding head 18 is advanced, by the action of the second motor 27 to abut against the external wall of the edge 14 of the hole 12b;

- It is enabled the welding head 18 which induces the weld of the flange 13 with the internal face of the edge 14 of the hole 12b;
- The support is brought in the insertion position, with no pour spout fitment 11 and the welding head 18 is moved back.

The invention thus conceived is susceptible to many modifications and variants, all of which fall into the scope of the affixed claims.

Furthermore, it will be possible to substitute all the details with other elements technically equivalent.

In practice, it will be possible to modify the used materials, as well as the contingent shapes and sizes, according to the contingent needs and the state of the art.

Where the building characteristics and the mentioned techniques in the following claims are followed by signals and reference numbers, such signals or reference numbers have been placed with the only objective to increase the comprehensibility of the claims themselves, and consequently, they do not constitute in any way a limitation to the interpretation of each identified element, as a pure example, by such signals or reference numbers.

## Claims

1. Apparatus for coupling a pour spout fitment (11) to a container (12) comprising:
- a structure (15),
- a mobile arm (16), associated with said structure (15) and tilting with respect to the latter about an oscillation axis (A);
- a support (17) for a pour spout fitment (11), associated with said mobile arm (16) and slidable along a translation direction (B) which is transverse to said oscillation axis (A);
- a welding head (18) adapted to abut against a wall (12a) of said container (12), associated with said structure (15) and slidable with respect to the latter in a welding direction (C), transverse to said oscillation axis (A);
- a feeder (19) of pour spout fitments (11), associated with said structure (15) and equipped with a power head (20) adapted for coupling a pour spout fitment (11) to said support (17);
- first motor means (21) connected to said structure (15) and said mobile arm (16) to oscillate said mobile arm (16) about said oscillation axis (A), between
- a loading position, in which said support (17) is facing said power head (20) for receiving a pour spout fitment (11), and
- an insertion position in which said support (17) is spaced apart from said welding head (18) and aligned to the latter with respect to said translation direction (B), and said translation direction (B) is parallel to said welding direction (C);
- second motor means (22) connected simultaneously to said support (17) and to said welding head (18) to actuate a simultaneous sliding of said support (17), in said translation direction (B), and of said welding head (18), in said welding direction (C), between
- said insertion position;
- and a welding position in which, in use, said pour spout fitment (11) and the wall (12a) of said container (12) are pinched between said welding head (18) and said support (17);
**characterized in that** said support (17) for a pour spout fitment (11) is slidable with respect to said mobile arm (16) along said translation direction (B), and **in that** said mobile arm (16) is provided above said welding head (18).

2. Apparatus according to claim 1 **characterized in that** said translation direction (B) and said welding direction (C) are perpendicular to said oscillation axis (A), and **in that**, in said loading position, said translation direction (B) and said welding direction (C) form an acute angle.

3. Apparatus according to one of the preceding claims **characterized in that** it comprises thrust means adapted to impart through said welding head (18) and said support (17), in use in said welding position, a predetermined force on said pour spout fitment (11) coupled with the wall (12a) of said container (12).

4. Apparatus according to one of the preceding claims **characterized in that** it comprises a hub (23) fixed to said mobile arm (16) and connected to said structure (15) rotatably about said oscillation axis (A), said first motor means (21) comprising a first motor (24) fixed to said structure (15) and first transmission means (25) connected to the shaft of said first motor (24) and to said hub (23) to transmit a rotational motion, said second motor means (22) comprising:
- an actuating element (26) connected to said hub (23) rotatably about said oscillation axis (A), also connected to said support (17) and to said welding head (18) and configured to operate the passage between said insertion position and said welding position as a result of a rotation of said actuating element (26) about said oscillation axis (A);
- a second motor (27) fixed to said structure (15);
- second transmission means (28), connected to the shaft of said second motor (27) and said actuating element (26) for transmitting a rotational motion between the shaft of said second motor (27) and said actuating element (26) for driving the rotation of said actuating element (26) about said oscillation axis (A).

5. Apparatus according to claim 4 **characterized in that** said first transmission means (25) comprise:
- a first crank element (29) fixed to the shaft of said first motor (24);
- a first connecting rod element (30) having a first joint (30a) rotatably connected to said first crank element (29) and a second joint (30b) connected to said mobile arm (16), to transmit the motion.

6. Apparatus according to claim 5, **characterized in that**, in said loading position and in said insertion position, said first joint (30a), said second joint (30b) and the shaft of said first motor (24) are aligned according to a direction which is preferably perpendicular to said translation direction (B).

7. Apparatus according to one of claims from 4 to 6, **characterized in that** said second transmission means (28) comprise:
- a second crank element (31) fixed to the shaft of said second motor (27);
- a third crank element 32 fixed to said hub (23);
- a second connecting rod element (33) having a third joint (33a) rotatably connected to said second crank element (31) and a fourth joint (33b) connected to said third crank element 32.

8. Apparatus according to claim 7, **characterized in that**, in said welding position and in said insertion position, said third joint (33a), said fourth joint (33b) and the shaft of said second motor (27) are aligned.

9. Apparatus according to claim 3 and one of claims from 4 to 8 **characterized in that** said thrust means comprise
- connection means (34) connecting said actuating element (26) to said welding head (18) slidably along said welding direction (C);
- at least one elastic element (35) connected to said actuating element (26) and to said welding head (18) and adapted to elastically oppose the approach of said actuating element (26) and said welding head (18) along said welding direction (C).

10. Apparatus according to claim 9 **characterized in that** said thrust means are adjustable to adjust the force exerted on said pour spout fitment (11) coupled with the wall (12a) of said container (12).

## Patentansprüche

1. Vorrichtung zur Verbindung eines Ausgießelements (11) mit einem Behälter (12), umfassend:
- eine Struktur (15),
- einen mobilen Arm (16), der mit der Struktur (15) verbunden ist und in Bezug zur Letzteren um eine Schwingungsachse (A) kippt;
- eine Stütze (17) für ein Ausgießelement (11), die mit dem mobilen Arm (16) verbunden und entlang einer Translationsrichtung (B) verschiebbar ist, die quer zur Schwingungsachse (A) ist;
- einen Schweißkopf (18), der angepasst ist, gegen eine Wand (12a) des Behälters (12) anzustoßen, der mit der Struktur (15) verbunden ist und in Bezug auf die Letztere in eine Schweißrichtung (C), quer zur Schwingungsachse (A), verschiebbar ist;
- einen Zulieferer (19) von Ausgießelementen (11), der mit der Struktur (15) verbunden ist und mit einem Antriebskopf (20) ausgerüstet ist, der angepasst ist, ein Ausgießelement (11) mit der Stütze (17) zu verbinden;
- erste Motormittel (21), die mit der Struktur (15) und dem mobilen Arm (16) verbunden sind, um den mobilen Arm (16) um die Schwingachse (A) zwischen
- einer Ladeposition, in welcher die Stütze (17) dem Antriebskopf (20) zum Empfangen eines Ausgießelements (11) zugewandt ist, und
- einer Einschubposition zu schwingen, in welcher die Stütze (17) vom Schweißkopf (18) beabstandet und mit dem Letzteren in Bezug auf die Translationsrichtung (B) ausgerichtet ist, und die Translationsrichtung (B) parallel zur Schweißrichtung (C) ist;
- zweite Motormittel (22), die gleichzeitig mit der Stütze (17) und dem Schweißkopf (18) verbunden sind, um ein gleichzeitiges Verschieben der Stütze (17) in die Translationsrichtung (B) und des Schweißkopfes (18) in die Schweißrichtung (C) zwischen
- der Einschubposition;
- und einer Schweißposition zu veranlassen, in welcher, im Gebrauch, das Ausgießelement (11) und die Wand (12a) des Behälters (12) zwischen dem Schweißkopf (18) und der Stütze (17) zusammengepresst werden;
**dadurch gekennzeichnet, dass** die Stütze (17) für ein Ausgießelement (11) in Bezug auf den mobilen Arm (16) entlang der Translationsrichtung (B) verschiebbar ist, und dass der mobile Arm (16) über dem Schweißkopf (18) bereitgestellt ist.

2. Vorrichtung nach Anspruch 1, **dadurch gekennzeichnet, dass** die Translationsrichtung (B) und die Schweißrichtung (C) senkrecht zur Schwingungsachse (A) sind, und dass in der Ladeposition die Translationsrichtung (B) und die Schweißrichtung (C) einen spitzen Winkel bilden.

3. Vorrichtung nach einem der vorhergehenden Ansprüche, **dadurch gekennzeichnet, dass** sie Druckmittel umfasst, die angepasst sind, durch den Schweißkopf (18) und die Stütze (17), im Gebrauch in der Schweißposition, eine vorbestimmte Kraft auf das Ausgießelement (11) weiterzugeben, das mit der Wand (12a) des Behälters (12) gekoppelt ist.

4. Vorrichtung nach einem der vorhergehenden Ansprüche, **dadurch gekennzeichnet, dass** sie eine Nabe (23) umfasst, die am mobilen Arm (16) fixiert und mit der Struktur (15) drehbar um die Schwingungsachse (A) verbunden ist, wobei die ersten Motormittel (21) einen ersten Motor (24) umfassen, der an der Struktur (15) befestigt ist und das erste Getriebemittel (25) mit der Welle des ersten Motors (24) und mit der Nabe (23) verbunden ist, um eine Drehbewegung zu übertragen, wobei die zweiten Motormittel (22) umfassen:
- ein Betätigungselement (26), das mit der Nabe (23) um die Schwingungsachse (A) drehbar verbunden ist, außerdem mit der Stütze (17) und mit dem Schweißkopf (18) verbunden und konfiguriert ist, den Durchgang zwischen der Einschubposition und der Schweißposition als ein Ergebnis einer Drehung des Betätigungselements (26) um die Schwingungsachse (A) zu betreiben;
- einen zweiten Motor (27), der an der Struktur (15) befestigt ist;
- zweite Getriebemittel (28), die mit der Welle des zweiten Motors (27) und dem Betätigungselement (26) zur Übertragung einer Drehbewegung zwischen der Welle des zweiten Motors (27) und dem Betätigungselement (26) verbunden ist, um die Drehung des Betätigungselements (26) um die Schwingungsachse (A) zu anzutreiben.

5. Vorrichtung nach Anspruch 4 **dadurch gekennzeichnet, dass** die ersten Getriebemittel (25) umfassen:
- ein erstes Kurbelelement (29), das an der Welle des ersten Motors (24) fixiert ist;
- ein erstes Verbindungsstangenelement (30), das aufweist ein erstes Gelenk (30a), das drehbar mit dem ersten Kurbelelement (29) verbunden ist, und ein zweites Gelenk (30b), das mit dem mobilen Arm (16) verbunden ist, um die Bewegung zu übertragen.

6. Vorrichtung nach Anspruch 5, **dadurch gekennzeichnet, dass** in der Ladeposition und in der Einschubposition das erste Gelenk (30a), das zweite Gelenk (30b) und die Welle des ersten Motors (24) gemäß einer Richtung ausgerichtet sind, die vorzugsweise senkrecht zur Translationsrichtung (B) ist.

7. Vorrichtung nach einem der Ansprüche 4 bis 6, **dadurch gekennzeichnet, dass** die zweiten Getriebemittel (28) umfassen:
- ein zweites Kurbelelement (31), das an der Welle des zweiten Motors (27) fixiert ist;
- ein drittes Kurbelelement 32, das an der Nabe (23) fixiert ist;
- ein zweites Verbindungsstangenelement (33), das aufweist ein drittes Gelenk (33a), das drehbar mit dem zweiten Kurbelelement (31) verbunden ist, und ein viertes Gelenk (33b), das mit dem dritten Kurbelelement 32 verbunden ist.

8. Vorrichtung nach Anspruch 7, **dadurch gekennzeichnet, dass** in der Schweißposition und in der Einschubposition das dritte Gelenk (33a), das vierte Gelenk (33b) und die Welle des zweiten Motors (27) ausgerichtet sind.

9. Vorrichtung nach Anspruch 3 und einem der Ansprüche 4 bis 8, **dadurch gekennzeichnet, dass** die Druckmittel umfassen:
- Verbindungsmittel (34), welche das Betätigungselement (26) mit dem Schweißkopf (18) entlang der Schweißrichtung (C) verschiebbar verbinden;
- mindestens ein elastisches Element (35), das mit dem Betätigungselement (26) und dem Schweißkopf (18) verbunden und angepasst ist, sich der Annäherung des Betätigungselements (26) und des Schweißkopfes (18) entlang der Schweißrichtung (C) elastisch zu widersetzen.

10. Vorrichtung nach Anspruch 9, **dadurch gekennzeichnet, dass** die Druckmittel einstellbar sind, um die Kraft einzustellen, die auf das Ausgießelement (11) ausgeübt wird, das mit der Wand (12a) des Behälters (12) gekoppelt ist.

## Revendications

1. Appareil pour le couplage d'un accessoire en forme de bec verseur (11) à un récipient (12) comprenant :
- une structure (15) ;
- un bras mobile (16) associé à ladite structure (15) et basculant par rapport à cette dernière autour d'un axe d'oscillation (A) ;
- un support (17) pour un accessoire en forme de bec verseur (11), associé audit bras mobile (16) et apte à coulisser dans une direction de translation (B) qui est transversale par rapport audit axe d'oscillation (A) ;
- une tête de soudage (18) conçue pour venir buter contre une paroi (12a) dudit récipient (12), associée à ladite structure (15) et apte à coulisser par rapport à cette dernière dans une direction de soudage (C) transversale par rapport audit axe d'oscillation (A) ;
- un dispositif d'alimentation (19) d'accessoires en forme de becs verseurs (11), associé à ladite structure (15) et équipé d'une tête d'alimentation (20) conçue pour le couplage d'un accessoire en forme de bec verseur (11) audit support (17) ;
- un premier moyen (21) faisant office de moteur relié à ladite structure (15) et audit bras mobile (16) pour l'oscillation dudit bras mobile (16) autour dudit axe d'oscillation (A) entre :
- une position de chargement dans laquelle ledit support (17) fait face à ladite tête d'alimentation (20) pour la réception d'un accessoire en forme de bec verseur (11) ; et
- une position d'insertion dans laquelle ledit support (17) est séparé de ladite tête de soudage (18) et aligné à cette dernière dans ladite direction de translation (B), et ladite direction de translation (B) est parallèle à ladite direction de soudage (C) ;
- un second moyen (22) faisant office de moteur relié de manière simultanée audit support (17) et à ladite tête de soudage (18) pour entraîner un coulissement simultané dudit support (17), dans ladite direction de translation (B), et de la tête de soudage (18) dans ladite direction de soudage (C) entre :
- ladite position d'insertion ;
- une position de soudage dans laquelle, en état de marche, ledit accessoire en forme de bec verseur (11) et la paroi (12a) dudit récipient (12) sont pincés entre ladite tête de soudage (18) et ledit support (17) ;
**caractérisé en ce que** ledit support (17) pour un accessoire en forme de bec verseur (11) est apte à coulisser par rapport audit bras mobile (16) dans ladite direction de translation (B) et **en ce que** ledit bras mobile (16) est prévu au-dessus de ladite tête de soudage (18).

2. Appareil selon la revendication 1, **caractérisé en ce que** ladite direction de translation (B) et ladite direction de soudage (C) sont perpendiculaires audit axe d'oscillation (A), et **en ce que**, dans ladite position de chargement, ladite direction de translation (B) et ladite direction de soudage (C) forment un angle aigu.

3. Appareil selon une des revendications précédentes, **caractérisé en ce qu'**il comprend des moyens de poussée conçus pour imprimer, via ladite tête de soudage (18) et ledit support (17), en état de marche dans ladite position de soudage, une force prédéterminée sur ledit accessoire en forme de bec verseur (11) couplé à la paroi (12a) dudit récipient (12).

4. Appareil selon une des revendications précédentes, **caractérisé en ce qu'**il comprend un moyeu (23) fixé audit bras mobile (16) et relié à ladite structure (15) en rotation autour dudit axe d'oscillation (A), ledit premier moyen (21) faisant office de moteur comprenant un premier moteur (24) fixé à ladite structure (15) et un premier moyen de transmission (25) relié à l'arbre dudit premier moteur (24) et audit moyeu (23) pour transmettre un mouvement rotatif, ledit second moyen (22) faisant office de moteur comprenant :
- un élément d'actionnement (26) relié audit moyeu (23) en rotation autour dudit axe d'oscillation (A), également relié audit support (17) et à ladite tête de soudage (18) et configuré pour mettre en oeuvre le passage entre ladite position d'insertion et ladite position de soudage suite à une rotation dudit élément d'actionnement (26) autour dudit axe d'oscillation (A) ;
- un second moteur (27) fixé à ladite structure (15) ;
- des seconds moyens de transmission (28) reliés à l'arbre dudit second moteur (27) et audit élément d'actionnement (26) pour la transmission d'un mouvement rotatif entre l'arbre dudit second moteur (27) et ledit élément d'actionnement (26) pour entraîner la rotation dudit élément d'actionnement (26) autour dudit axe d'oscillation (A).

5. Appareil selon la revendication 4, **caractérisé en ce que** lesdits premiers moyens de transmission (25) comprennent :
- un premier élément (29) faisant office de manivelle fixé à l'arbre dudit premier moteur (24) ;
- un premier élément (30) faisant office de bielle possédant une première articulation (30a) reliée en rotation audit premier élément (29) faisant office de manivelle et une seconde articulation (30b) reliée audit bras mobile (16) pour la transmission du mouvement.

6. Appareil selon la revendication 5, **caractérisé en ce que**, dans ladite position de chargement et dans ladite position d'insertion, ladite première articulation (30a), ladite seconde articulation (30b) et l'arbre dudit premier moteur (24) sont alignés dans une direction qui est de préférence perpendiculaire à ladite direction de translation (B).

7. Appareil selon une des revendications 4 à 6, **caractérisé en ce que** lesdits seconds moyens de transmission (28) comprennent :
- un deuxième élément (31) faisant office de manivelle fixé à l'arbre dudit second moteur (27) ;
- un troisième élément (32) faisant office de manivelle fixé audit moyeu (23) ;
- un second élément (33) faisant office de bielle possédant une troisième articulation (33a) reliée en rotation audit deuxième élément (31) faisant office de manivelle et une quatrième articulation (33b) reliée audit troisième élément (32) faisant office de manivelle.

8. Appareil selon la revendication 7, **caractérisé en ce que**, dans ladite position de soudage et dans ladite position d'insertion, ladite troisième articulation (33a), ladite quatrième articulation (33b) et l'arbre dudit second moteur (27) sont alignés.

9. Appareil selon la revendication 3 et selon une des revendications 4 à 8, **caractérisé en ce que** lesdits moyens de poussée comprennent :
- des moyens de liaison (34) reliant ledit élément d'actionnement (26) à ladite tête de soudage (18) en coulissement dans ladite direction de soudage (C) ;
- au moins un élément élastique (35) relié audit élément d'actionnement (26) et à ladite tête de soudage (18) et conçu pour s'opposer de manière élastique à l'approche dudit élément d'actionnement (26) et de ladite tête de soudage (18) dans ladite direction de soudage (C).

10. Appareil selon la revendication 9, **caractérisé en ce que** lesdits moyens de poussée sont réglables pour régler la force qui s'exerce sur ledit accessoire en forme de bec verseur (11) couplé à la paroi (12a) dudit récipient (12).
